# EUROPEAN PATENT APPLICATION

(11) **EP 1 168 265 A1**
(43) Date of publication of application: **02.01.2002**
(21) Application number: 00810556.1
(22) Date of filing: 26.06.2000
(51) Int. Cl.: G07F 19/00, H04L 9/32

(54) **Device for carrying out secure transactions in a communications network**

(71) Applicant: Covadis SA, 1228 Plan-les-Ouates (CH)
(72) Inventor: The designation of the inventor has not yet been filed
(74) Representative: Cronin, Brian Harold John

(57) **Abstract**

A device, in particular a card reader (30) connectable as a terminal of communications network such as the Internet for carrying out secure transactions, in particular using a protocol such as SET, comprises a keypad (34), a display (36) for displaying messages related to a secure transaction in progress, a DSP microprocessor (38) and a memory (40) comprising a non-volatile memory and a RAM. The non-volatile memory is arranged to store software in three shells, a boot shell (62), a system shell (64) and an application shell (66). The boot shell contains non-downloadable ground software that manages software download into the system shell and the application shell. The device is associated with downloadable system shell software and application shell software, one application being arranged to momentaneously store in a network-inaccessible part of the RAM a PAN or PIN code keyed in via the keypad (34); encrypt the code and output the encrypted code to the communications network. The device is useful for secure transactions in e-commerce, e-banking, e-tax, e-mail, telecommunications and restricted access systems, etc.

## Description

### Field of the Invention

This invention relates to a device connectable as a terminal of a communications network for carrying out secure transactions in the network, in particular in conjunction with operations like e-commerce, e-banking, e-tax and e-mail using the Internet, and in telecommunications and restricted access systems. The invention is applicable *inter alia* to secure transactions in a communications network like the Internet wherein encrypted data is communicated between a card issuer system, merchant site applications and a banking system using a protocol such as the Secure Electronic Transaction (SET). The invention also relates to a cardholder system for carrying out secure transactions in a communications network, comprising a device associated with a local computer application (LCA), such as a PC, to which the device is connected.

### Background Art

There have been many proposals for carrying out secure transactions in an insecure communications network like the Internet.

For example, channel security schemes such as secure HTTP (S-HTTP) and the Secure Socket Layer (SSL) protocol are intended to create confidence between two communicating parties. S-HTTP uses digitally signed messages with a heavy encryption key to ensure security and authentication. SSL utilizes digitally signed certificates to provide authentication and security by heavily encrypting the messages. This channel security technology makes confidential transmitted information, but it does not protect the merchant and the bank involved in a transaction against "true-false" card numbers, nor does it protect the customer against the abuse of their personal data, and it does not allow the bank to guarantee payments to merchants.

Multi-party protocols have also been proposed for credit transactions, like Secure Transport Technology (STT), Internet Keyed Payments (iKP) and Secure Electronic Payment Protocol (SEPP). The aforementioned SET secure payment technology represents the state-of-the art in Internet based payment processing. More recently a new specification known as EMV, based on the SET protocol, has been developed by EuroCard-Mastercard-Visa with plans for future implementation.

The SET protocol is designed on a hierarchy of trust for the management and verification of SET certificates by certificate authorities, notably between a Cardholder Certificate Authority (who issue cards to cardholders), a Merchant Certificate Authority (who issue certificates to merchants) and a Payment Gateway Certificate Authority, controlling a SET Payment Gateway. The SET protocol is based on the exchange of digital certificates to provide a banking guarantee. SET prevents fraudulent use of payment card numbers, and prevents the interception of confidential information by a third party.

These protocols provide good security between the banks and merchants but, like the previously-mentioned channel security schemes, do not provide full security to the individual user. Although the user's private data like a PAN or a PIN code is transmitted through the Internet in encrypted form in such a manner that the encrypted data can only be decrypted by an authorized institution, when the user enters this information for example via a PC connected in the network, the unencoded data is exposed to an "attack" by an unauthorized person. This has led to abuse and to a considerable amount of litigation concerning unauthorized transactions.

Card readers for accepting so-called smart cards (also known as chip card, IC card or ICC, hereinafter referred to collectively as "ICC" or simply "card") are also known. These card readers typically comprise a keypad, a display for displaying messages related to a secure transaction in progress, a microprocessor and a memory. However, the known card readers do not overcome the above-indicated problem and generally each type of card reader has the limitation that it is specific for a particular application.

### Summary of the Invention

An object of the invention is to provide a device connectable as a terminal to a communications network such as the Internet for carrying out secure transactions over the network providing full security for the user, and which can be used with different applications and for many different secure transactions, for example in conjunction with operations like e-commerce, e-banking, e-tax, e-mail, telecommunications and restricted access systems, making it very versatile.

The invention provides a device connectable as a terminal of a communications network for carrying out secure transactions in the communications network, the device comprising a keypad, a display for displaying messages related to a secure transaction in progress, a microprocessor, advantageously a DSP microprocessor, and a memory, comprising a non-volatile memory and a RAM.

The device's a non-volatile memory (hereinafter exemplified as an E²PROM) is arranged to store software in three shells, a boot shell, a system shell and an application shell, wherein the boot shell contains non-downloadable ground software that manages boot operation and software download into the system shell and the application shell.

The device is associated with software downloadable into or downloaded in the a non-volatile memory, namely system shell software containing operating system software that manages the application shell, an ASN library and an encryption/decryption toolbox and optionally a card manager; and application shell software containing software that manages applications for secure transactions.

The downloadable application shell software comprises an application that, when the software is downloaded into the non-volatile memory and the device is connected to the communications network, is arranged to perform a code encryption operation internally of the device when a user keys in a code via the keypad to perform a secure transaction. This code may for example be a PAN or PIN code whose entry constitutes a necessary step for transaction acceptance. This application is so arranged that, when the software is downloaded into the non-volatile memory and the device is connected to the communications network, it encrypts within the device a code keyed in via the keypad and outputs the encrypted code, without the keyed-in code being accessible from outside the device.

For example, when the code is keyed-in, the unencrypted code is firstly momentaneously stored in a non-readable part of the RAM, inaccessible from the network. The momentaneously-stored keyed-in code is encrypted (the entire encryption usually being carried out by means of the downloaded encryption toolbox) then erased from the RAM soon after encryption. The encrypted code is then output from within the device to the communications network, for example in response to the user entering an acceptance code. This enables acceptance of a secure transaction by the user keying in a PAN and/or a PAN or PIN code, without the unencrypted PAN and/or PIN code ever being accessible from the communications network.

Moreover, the device is simple to use and can be produced at low cost notably by using the DSP technology, making it possible to use the device for macro and micro payments, and a wide range of secure transactions.

The device according to the invention is a veritable lock allowing a security check on a secret code (for example a PAN code associated with a magnetic card or a smart card, or a PIN code associated with a smart card), without any transmission of the unencrypted secret code to the communication network, e.g. via the CPU of a personal computer connected to the Internet and to which the device is connected.

At least part of the cryptography takes place within the device: the encryption signature is generated within the device, and the PAN and/or PIN is/are encrypted within the device. When the transaction on the network is protected by a protocol such as SET, the transaction can be signed also by the device. The SET issuer is able to authenticate the device, and the issuer has insurance on the security level. It is possible but however not necessary to manage the SET certificates inside the device.

A large amount of memory can be made available in the device (say 8 Mbits), so many applications can be installed.

One of the main advantages of the device is the speed of the transaction due to the DSP processor used. This performance allows a high level of protection of data transferred from or to the network (typically via a connected PC) by undertaking huge calculations for data encryption or decryption. For example, the device is able to encrypt data by using an RSA public key of 1024 bits with its full exponent in less than 5 s.

The device is advantageously used in connection with an ICC to perform secure transactions on a communications network, the device enabling on-line card authentication. For this purpose, the device preferably comprises a card reader for an ICC card, the device being arranged to enable card identification and acceptance on an ICC inserted in the reader followed, if the card is accepted, by the above-described operations to establish transaction acceptance. At least a part of these card identification and acceptance operations and/or of said transaction acceptance operations can advantageously be performed using a processor incorporated in an ICC inserted in the device, as will be more fully described below.

In this context, the merchant is certified whereas the device according to the invention operates in a closed security environment in which the device provides certitude of authentication of the purchaser by electronic signature. On-line authorization of the transaction provides a guarantee for the payment or other transaction. Control of the card signature takes place on line, not off line. Bogus merchants/bogus cardholders are eliminated. There is no possibility of fraud, therefore no repudiation, no litigation with the cardholder and no chargebacks to be managed.

An important feature of the device is its ability to download system and application software and to use the downloaded software for performing the operations involved in establishing a secure transaction with the communications network. Particularly in the banking sector, there are frequent modifications liable to make software become obsolete rapidly. The device's downloading capability enables constant updating according to software developments, in particular new or upgraded applications can be downloaded into the device from a server or from a local computer application connectable to the communications network.

For the purpose of allowing software upgrade, the device's non-volatile memory (E²PROM) can comprise a buffer zone serving as a buffer memory for temporarily storing previously-loaded system and/or application software during a download operation, the memory being associated with means, responsive to a signal indicating interruption or failure of a download operation, for reloading system and/or application software stored in the buffer memory.

A device according to the invention can be incorporated in various pieces of equipment, one particular embodiment being an external card reader connectable to a personal computer preferably via an USB connector. Such card reader can include an ergonomically-designed card reader body that can be held in the hand or placed on a support surface during use, the body having a slot for receiving an ICC leaving a part of the ICC protruding during use to prompt card removal when an operation is finished. The card reader body also integrates the keypad and display, and internally contains the memory.

Another embodiment is a discrete keyboard of a personal computer incorporating a device according to the invention, the keyboard being connectable to a personal computer via an USB connector. The main set of keys of the keyboard may be used also as the device keypad, or the device can have a dedicated keypad located alongside the keyboard's usual keys. The keyboard may incorporate its own display for the messages related to secure transactions, or the computer screen can be used for display. It will preferably also have a slot for receiving an ICC, the keyboard thus also serving as a card reader.

The device according to the invention can also be incorporated in a portable personal computer, in which case the device must have its own memory and keypad separate from the computer's hardware accessible to a communications network. The PC's screen can however also be used as the device's display.

Further examples are a Set Top Box of a digital television receiver connectable to a communications network by a parabolic antenna, a mobile communications device such as a telephone connectable via a cellular system of via satellite to a communications network, a fixed telephone set, and a point-of-sale vending device such as a distributor for rental video cassettes, all of which can incorporate a device according to the invention.

The invention also concerns a cardholder system for carrying out secure transactions in a communications network, comprising a device as set out above associated with a local computer, such as a PC, to which the device is connected, preferably by a USB connector. In such a cardholder system the local computer can store software including a Dynamic Link Library (DLL) for cooperating with system shell software and application shell software downloaded in the device's non-volatile memory to perform secure transactions in the network.

Another aspect of the invention is a communications network in which encrypted data is exchanged between a card issuer system, merchant site applications, a payment gateway and a device or a cardholder system as set out above, wherein the device is connected to the communications network to form a terminal for carrying out secure transactions in the network, in particular transactions in which the card issuer system, merchant site applications, and payment gateway exchange electronic certificates according to a protocol such as SET. The device can provide particularly high security by combining security based on the ICC with the certificate principle embodied by SET and other protocols. Using the device, there is no circulation of banking secrets or personal secrets on the Internet, only enciphered data.

The device's downloading capability makes it particularly versatile in the context of security protocols like SET, because the device can be constantly upgraded relative to a particular protocol, and can be upgraded by simple software download if a new specification like EMV or the "Blue Tooth" standard comes into use.

The device of the invention is advantageously used with an ICC insertable in the device for effecting a secure transaction in a communications network, but it can also be used for effecting secure transactions in a communications network without the insertion of an ICC in the device. Examples of transactions without using an ICC are e-mail encryption, and operations where credit card data such as the credit card number and expiry data are keyed in by the user, possibly associated with providing other means of identification, as required. Even when the device is provided with a card reader, it is possible to use the device for secure transactions without inserting a card therein.

The device can be used in general for all secure transactions with a communications network, including credit card and debit card applications, virtual card transactions, as an e-purse (in particular for reloading e-purses at home), for health cards, e-trade, e-banking including home banking, e-mail security, secure access to personal data, secure dealings with public authorities including e-tax, e-voting including voting as company shareholder, telecommunications in systems with fixed telephone sets and mobile telephones, and for selective access to restricted-access systems including defense-related and private access systems, etc.

The invention also concerns a computer program, stored on a computer readable medium such as a CD-ROM or on a server, for carrying out secure transactions in a communications network to which a device according to the invention is connected via a local computer application. This program includes the above-described system shell software and application shell software downloadable into the device's non-volatile memory, as well as software downloadable into the local computer application for managing all transmissions between a local computer and the device, including a Dynamic Link Library (DLL), a system driver for USB management and for I/O management, an executable file for managing the download operations, and optionally a test program.

### Brief Description of Drawings

In the accompanying schematic drawings, given by way of example:
Fig. 1 is a diagram illustrating a device according to the invention in the form of an ICC card reader;
Fig. 2 is an overview of a system for secure transactions over the Internet;
Fig. 3 illustrates the software architecture;
Fig. 4 is a diagram illustrating a sequence of operations involved in a secure transaction; and
Fig. 5 is a similar diagram illustrating a sequence of operations involved in a download operation.

### Detailed Description

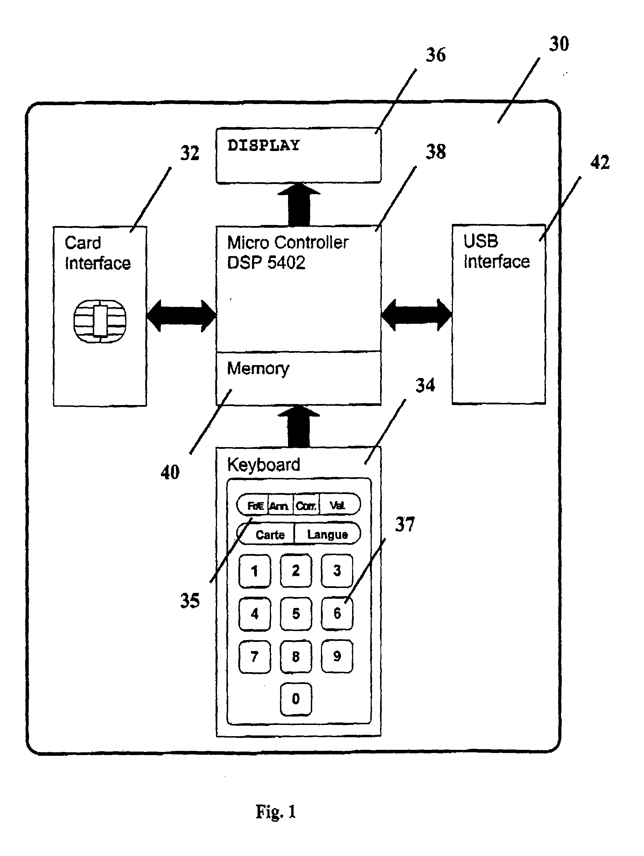

The device shown schematically in Fig. 1 is a card reader 30 that has been designed to perform all card operations and the application processes that must be protected from the external world of the card reader.

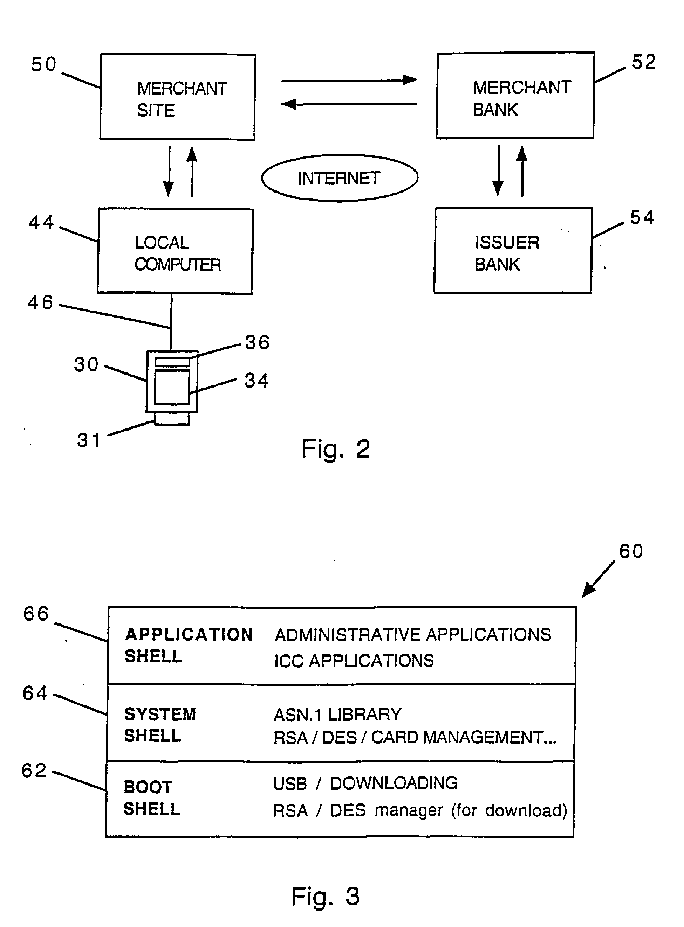

The card reader 30 comprises a card interface 32, a keypad 34, a display 36 for displaying messages related to a secure transaction in progress, a DSP microprocessor 38 and a memory 40 comprising an E²PROM and a RAM. The keypad 34 and display 36 constitute a user interface. The device further includes an USB interface 42 for connection of the reader to a personal computer 44 via an USB connector 46, see Fig. 2. The reader hardware connects to the PC 44 as a high-speed bus-powered device on the USB bus.

The keypad 34 includes a set of function keys 35 and ten digit keys 37 for keying in the digits 0 to 9. The reader's function keys 35 can for example include: a language key for switching the language of the displayed message; a conversion key for displaying currency conversions (e.g. FF and Euro); a cancellation key for interrupting the current transaction; a correction key for erasing the last pressed key (correction of the introduced PAN and/or PIN code); and a validation key for accepting the entered PAN and/or PIN code and to continue the payment process. Further functions can be included, as required.

### System Overview

As illustrated in Fig. 2 the reader 30 with an inserted ICC 31 is connected to a computer 44 that uses an Internet browser application. The computer 44 user can open a session on a merchant site 50 that offers a service or product, the purchase of which will be controlled using an exchange of electronic certificates with a merchant bank 52 and an issuer bank 54, using for example the SET protocol, as described in greater detail later.

By activating a service at the merchant site 50, the user starts a merchant site application MSA, also designated by reference 50. This operation can connect other Internet sites and start corresponding applications on many sites. One of these applications will send back to the user computer 44 a so-called "Wake-Up" request that will activate a specific application on the local computer 44. This application activates the reader 30 and manages the transaction between reader 30 and the remote Internet site. When the operation is finished, the local application cancels the link to the reader 30 and stops. The remote site receives a positive or negative acknowledgment after the operation.

The reader 30 and the local computer 44 represent the cardholder system, as defined in the SET standard. The ICC 31 and the issuer bank 54 are the issuer system. The merchant site 50, its bank 52 and the associated payment gateway represent the acquirer system.

The reader 30 has been designed to be used by any computer application, typically a personal computer 44. The reader 30 is activated using a dynamic-link library (DLL) stored in the computer 44's hard disk, and calling the specified interface functions. As soon as these operations are done in a correct way, the reader 30 performs the requested applications. Each application is independent and its software can be downloaded separately into memory 40's E²PROM. This modular implementation allows the reader software to be updated or even upgraded.

The reader 30 is connected to the computer 44 through the USB cable 46. The reader 30 is identified by the local computer 44. If not, the operating system of the computer automatically starts an installation procedure, after which the reader 30 is identified by the host.

As described previously, the user by activating a merchant site 50 will download a Wake-Up request. This input file activates a local application, called the Local Computer Application LCA that will manage the reader 30 on the local computer 44 (the reference 44 is hereinafter used also for the LCA). This LCA 44 is linked to the reader 30 by a Dynamic-Link Library (DLL) that will transmit the LCA requests to the reader. The LCA 44 also formalizes the reader responses and sends them to the payment gateway through the MSA 50.

When the transaction is terminated the payment gateway (of Merchant Bank 52) sends to the MSA 50 and to the LCA 44 a positive or negative acknowledge message. When it receives this message, the LCA 44 stops the reader 30 and exits. In case this message does not come, a timeout is activated in the LCA 44 which stops the reader 30 and the local application after having displayed an error message.

The merchant site 50 corresponds to a web address that is usually described by a URL address, whereat a set of products can be bought. The products to be purchased can be selected by adding them to a basket. At the end of this selection, the purchaser can prepare a purchase command and select the payment support (SSL credit card operation, card operation with a virtual wallet, etc.).

The reader 30 is protected from being attacked from external entities by the following features.

A specific application can be provided for transparent commands from the local computer 44 to the ICC 31 based on the PC/SC specifications. However, no transparent command for the ICC 31 is allowed between the computer 44 and the reader 30 once a secure transaction has been initiated. For example, it is not possible to enter the PAN or PIN code on the computer keyboard and transmit this data to the reader 30 for checking. Confidential information like the PAN and/or PIN code is always encrypted before being sent to the computer 44 and vice-versa. The sensitive code lines are scrambled before being written in the reader 30's E²PROM.

Security is based on cryptogram algorithms: the higher the calculation performance, the higher the security level. However, a practical restriction on the cryptogram calculations comes from the real time operations. A calculation duration over a dozen seconds is unacceptable for the user. With the described reader, encryption calculations can be performed in under 5 seconds.

The SET protocol is advantageously chosen for the data management in order to match security requirements. Management of the SET protocol requires hardware and software with the following capabilities. A large memory space for the I/O buffers, larger than 4 kBytes in standard use, and extendible to say 64 kBytes for special cases. A flexible management of the I/O buffers is necessary, because all data could have various lengths. The I/O structure of the data should be managed in the heap of the reader's RAM, which should be larger than 4 kBytes. There must be a capacity for a large amount of calculations, which requires a DSP 38 with sufficiently high processing speed. This requires a RAM of at least 16 kWords. For example, a DSP of type TMS320UVC5402 available from Texas Instruments can be used.

Message Authentication Code can use up to 2048 bits of RSA coding (Rivest-Shamir-Adleman algorithm) with generation of private keys. A hash coding process of the signature can be provided.

The reader 30 is relatively low-cost, by using a low-cost DSP and E²PROM, and is robust and easy to install. It is not possible for the user to erase essential data by performing a wrong manipulation.

Taking into account that the invention is directed *inter alia* to the banking market segment having multiple functions that are frequently modified, the software is likely to become rapidly obsolete. The reader 30 is accordingly designed with a download capability. Only basic essential software remains in the reader 30. The drivers (for card 31, keypad 34, etc.), the libraries (ASN.1 messages, etc.) the system shell and all the applications are downloadable. This requires the following capabilities. A large reserve of E²PROM memory is provided for allowing the old version of the downloaded software to be buffered. In case of an interruption of the download operation, a restart will reinstall the old version. The download function should be triggered by an external application through the LCA 44 or by a user request. Moreover, the software must be controlled before being written in the memory.

For the protection of data, some essential information must be protected from being read by external people. For this, a part of the RAM is in a non-readable zone.

The reader 30 is associated with a DLL to provide an API to the user application, and a USB driver for the DLL to communicate with the system's driver stack. It also has an executable that manages the firmware download to the reader, and a test program that performs factory tests. This PC software is supplied with the reader for example for Windows 9872000 platforms. At the end of testing the reader receives a signature that cannot be removed.

The DLL is copied from an installation CD to the PC hard disc during the card reader installation when the system recognizes a new USB device, and is loaded as required by the user application. The API to the user application consists of three functions to open, read/write and close the reader 30. There are additional (non API) functions implemented in the DLL to assist the card reader in its operation. A block-oriented asynchronous half duplex transmission protocol has been defined to transfer data between the DLL and reader 30.

The USB driver (supplied with reader 30) is copied from an installation CD to the computer hard disc during card reader installation when the system recognizes a new USB device, and is loaded as required by the system when reader 30 is connected to the USB bus. The DLL communicates with reader 30 through this USB driver.

The use of an E²PROM in conjunction with a USB connection has the advantage that the reader 30 can operate from the mains supply without need for a battery.

The download executable (supplied with reader 30) is copied from the installation CD to the PC hard disc during card reader installation when the system recognizes a new USB device. It is executed from the LCA (via the DLL) when the user or a remote site application sends a download request. This download concerns updated firmware that should be transferred from an Internet site into the card reader. During this operation a window appears on the PC screen showing the transfer progress and status.

A factory test program is supplied for testing the card readers 30 after assembly. This program does basic functionality checks of the reader (USB, display, keypad, card insertion) and writes into its flash memory (E²PROM) a coded serial number from a barcode label on the reader 30.

### Software

The software installed in the reader 30 is essentially written in an object oriented programming language such as C and C++. But the reader processor 38, which is a DSP, only interprets assembler commands. For this reason the source files are firstly interpreted in assembler using a C/C++ compiler. Some functions that are critical in slowing the performance are optimized in assembler, for example functions that are called during the RSA calculations.

The software architecture is shown in Fig. 3. The reader software 60 has been built in three main shells, boot shell 62, system shell 64 and application shell 66. The boot shell 62 corresponds to the ground software that manages the software download; this shell can never be downloaded. The system shell 64, which is downloadable, corresponds to the rest of the operating system that manages the application shell. The application shell 66, also downloadable, contains the code that manages applications like the payment application.

As schematically illustrated, the boot shell 62 contains the USB manager, and all software for managing downloading, including an RSA/DES manager used for download. The downloadable system shell 64 contains an ASN.1 library which serves as I/O interpreter, the RSA and DES encryption/decryption tools and the drivers, like the card, keyboard and display manager. The downloadable application shell 62 contains administrative applications like a terminal identification application and a download application. It also contains ICC applications, i.e. a set of applications for each chip card, for example controlling different types of payment, for example payments using EMV parameters, or prepaid card payments or so-called Mondeo payments.

The DSP 38 is powered when the USB cable 46 is connected to computer 44. It starts to run and enters the boot shell 62 where all the basic start-up procedure is performed. This procedure essentially checks the validity of the system and activates the USB bus connection. Then the reader 30 waits for an open request from the LCA 44.

Once the LCA 44 has activated reader 30, the DLL sends a message to reader 30. Depending on the type of the request, the message will be managed in the boot shell 62 or transferred to the system shell 64 and managed by the system shell, or transferred to the application shell 66.

The boot shell software 62 can never be upgraded. In one embodiment, the system and the application can only be upgraded together. In another embodiment, the system and the application can be upgraded separately.

The boot shell 62, system shell 64 and the application shell 66 each has its own version number. A hardware version number is written on the electronic plate of the reader 30. Because this number is known during the manufacturing process, it is reported in the boot software that is installed at the end of the manufacturing process. So a new hardware version (n_{H}+1) corresponds to a new boot version (n_{B}+1). If the modifications in the boot shell 62 are sufficiently minor that the new boot version is compatible to the previous system version, the new boot version will keep the same model number. So a new boot version does not always result in a new model number. The hardware, the boot and the system version are respectively numbers (n_{H}+1), (n_{B}+1) and (n_{S}) at the end of the upgrade.

As a second example, the actual hardware is kept but the installed boot shell is modified. This modification alters the system, that is able to take into account the two different boot versions, by implementation of a switch that executes a specific function depending on the boot version. In this case we have (n_{H}), (n_{B}+1) and (n_{S}+1) for the hardware, the boot and the system versions respectively at the end of this upgrade. Because the new system version is still compatible with the old boot shells, the new system will be integrated as a new software version by the download server. The previous model number is kept.

If the boot shell modifications are sufficiently important so as to be no longer compatible with the current version of the system shell 64, the new system version will correspond to a new model number. The new system version will not be downloaded as a new version to the previous system shell. In this case, the new model number is maintained separately. The system and application shells 64,66 are no longer compatible and must be selected by the download server. It is understood that creating a new model has the drawback that a separate and independent release support is needed for each model. This is fully transparent for the user but has drawbacks for the producer.

When a hardware modification requires a modification of the boot shell 62 that does not alter the compatibility with the current or previous system and application shells 64,66 (for example the reader's box colour is modified), it is not considered as a new model, but as a new sub-model that does not require a specific maintenance from the download server.

An upgrade of the boot 62 or the application shell 64 often leads to an upgrade of the system shell 66. But some upgrades do not require a system upgrade. So the system shell is still independent from the other shells. If modifications to the other shells alter the system shell 66, a new system version will be given that corresponds to a new application identifier sub-version number issued by a controlling Organization.

Like the system shell 66, the upgrade of the applications is still independent from the other shells and the other applications. The applications are always independent from one another. An application upgrade always gives a new application version number. If the application modifications correspond to a specification upgrade, a new application identifier main version number is given. If they correspond to an internal (manufacturer) upgrade, only the identifier sub-version number sub-version number of the issuing Organization is incremented.

The code contained in the boot shell 62 essentially initializes the DSP 38 and checks if a valid system is present. If yes, it starts the display, keypad and card processes. If not, the reader 30 waits about 5 seconds, then restores the previous system by re-installing its back-up copy. Then this procedure activates the USB connection 46, and indicates "Reader ready" when the USB checking is finished. At this time, the reader program enters into an infinite loop that corresponds to a state machine, wherein the following events can produce a change of state: an incoming message from the DLL (via USB 42); pressing of a key by the user (keypad 34); insertion of a card 31 (Card I/O 32). All these events are managed by interruption vectors.

In the boot shell 62, the card I/O is used only for the detection of the card insertion or removal. Code enters the system shell 64 when the following functions are called by the boot shell 62:
- *StartMainSystem*: Starts and initializes the system shell 64.
- *DisplaySystemManager*: Manages the display of the messages in the boot shell 62.
- *MainSyskem*: Transfers an incoming message to the system shell 64.
- *StopMainSystem*: Stops the system.
The first and last functions control the execution of the system shell 64. The second function provides to the boot 62 the message library that can be upgraded. The *MainSystem* function controls all the access to the system, which operates according to the input message type. Messages that can enter the system shell can be split in four categories, the ASN (Abstract Syntax Notation) frame; Test requests; Download application requests; and Complementary Requests.

The input message, encoded according to the ASN specifications, is decoded and, depending on its command header, is treated by the application shell 66. The available applications are described below.

There are three entry point functions for each application that allow to initialize, to perform and to close the application. All of the data that are transferred inside the ASN structure of the I/O messages are managed by the system shell 64. These data are allocated and deallocated in the system shell 64, but managed in the application shell 66. The data that are specific to the application are allocated and deallocated inside the application shell 66.

Test requests concern manufacturing tests to ascertain that the reader 30 performs properly. Download application requests are managed by the boot shell 62, but the request for triggering the download application and its error management must be downloadable. For this reason, this part of the application is implemented in the system and in the application shells 64,66. Some specific application requests are managed by the system shell 64, notably to manage problems associated with management of huge I/O frames. Applications are called by the system shell 64. By definition, the applications should be independent from one another; they can depend from the boot and system shells; and they are called by three generic functions that are used for:
- *Initialization :*: Allocation of the data structure that is required during the process, initialization of the data and set up of the variable that controls the application process.
- *Processing :*: Non-blocking or blocking processing of the application steps.
- *Termination :*: Deallocation of the application data structure and final processing, like clearing of the display or request for card removal.
For example, the implementation of two applications is envisaged, an administrative application that manages the reader identification and the software download request; and a payment application that performs payment operations for a specific type of smart card.

As soon as a download operation is started, the previous system or/and application zone is copied in a backup or buffer zone of the E²PROM and is erased. During this operation, the keypad 34 and the card I/O 32 are deactivated and reader 30 displays at 36 the message "Downloading. Please Wait". Before downloading, the reader 30 prepares its ASN.1 answers. This is done in two functions called in the system shell 64. A first function prepares the correct answer that is expected by the LCA 44, which contains the path of the DLL file when this library must be downloaded by the LCA 44 at the end of the reader download process. A second function contains error messages that must be returned in case of an error.

### Secure Transaction Processing

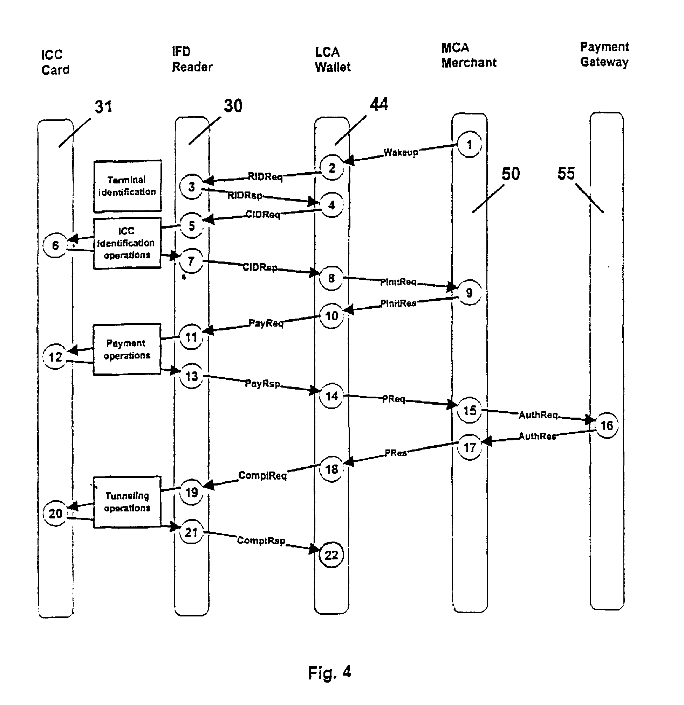

Fig. 4 illustrates a secure transaction such as a payment carried out with an ICC 31 in an interface device (IFD), namely reader 30 using a local computer 44 as an LCA Wallet communicating via the Internet with a merchant at a merchant site MCA 50 and a Payment Gateway 55, using for example the SET protocol. In Fig. 4, the numbers 1 to 21 are used to designate successive steps of the transaction, as follows.

### Steps 1-3: Reader Identification

The user by activating a merchant site 50 will download a *Wakeup* request as step 1, providing an input file that causes the LCA 44 to send a request for reader identification *RIDReq* to the reader 30 in step 2. Each reader 30 is identified by its coded serial number contained in its boot shell 62. If a recognized reader 30 is connected, an acknowledgment/response *RIDRsp* is returned to the LCA 44 in step 3.

### Steps 4-7: ICC Identification

In step 4, the LCA 44 sends a Card identification request *CIDReq* to the reader 30 which transmits this request in step 5 to the ICC 31. Identification of an ICC 31 inserted in the reader 30 takes place using the ICC's internal processor, i.e. without using the encryption/ decryption toolbox downloaded in the reader 30. Once the ICC 31 is identified an acceptance message *CIDRsp* is returned in steps 6 and 7 to the LCA 44. In this ICC identification process, the reader 30 acts as a "window": all necessary encryption/decryption operations take place in the ICC 31 and in the LCA 44.

The *CIDReq* asks for the ICC identification and also retrieves the initial payment parameters. This command is used by the LCA 44 to obtain the payment parameters required for building the payment request initiation message.

### Steps 8-17 : Payment Transaction

A payment initiation request *PinitReq* is then transmitted in step 8 from the LCA 44 to the Merchant Site 50 and returned, accompanied by the necessary certificate, to LCA 44 in step 9. This payment initiation request *PinitReq* is normally followed by a payment request *PayReq,* so no message requesting card removal is displayed when it is completed. An error during the treatment of this request will interrupt the payment procedure, and display at 36 a message inviting card removal.

In step 10, the LCA 44 sends a payment request *PayReq* to reader 30. The *PayReq* asks the reader 30 to perform the payment process. When the reader 30 receives such a request, it cannot perform another operation until the payment application has been completed. The *PayReq* asks the reader 30 to perform a transaction that is secured with a card signature. Through this command, the computer 44 receives data and information that can be displayed and returns the encrypted sensitive data to the gateway 55.

Payment operations are carried out between the reader 30 and card 31 in steps 11 and 12. At this stage, the reader 30 checks if a card 31 has been inserted. If not, it requires card insertion. Then it checks if the inserted card corresponds to the one that has previously been identified during the *CIDReq* operation. If not, an error message is displayed saying that the card is invalid and the payment procedure is interrupted.

After this initialization step, the reader 30 displays the amount to be debited and asks the user to enter his/her PIN code. By entering and confirming a valid PIN code, the user accepts the payment transaction conditions. The reader 30 confirms the correct PIN code introduction and performs the protection calculations. Then reader 30 sends a payment response *PRsp* to the LCA 44 in step 13. At the end of this command, the LCA 44 receives all the sensitive data encrypted in a protected frame that is included in a payment request message *PReq* sent to the MCA 50 in step 14. In this way, no sensitive data will be readable on the local computer 44 nor transferred into the Internet.

The MCA 50 provides the necessary certificate and includes this in an authorization request *AuthReq* sent to the Payment Gateway 55 as step 15. The Payment Gateway 55 possesses the necessary key to decrypt the encrypted card-identification data provided in step 6, and provide a payment authorization request *AuthRes* to the MCA 50 in step 16, the MCA 50 then transmitting a payment request *PRes* to the LCA 44 in step 17 so the payment request can be performed on the LCA.

The card 31 can be removed at the end of the payment process. If a complementary request *Comp1Req* (see below) is sent after the *PRs,* the reader 30 does not ask for card removal. Different messages are displayed on display 36 during further payment processing, even when an error occurs. An error interrupts the payment transaction and the reader 30 asks for card removal.

### Steps 18-21: Further processing

After a payment transaction, the reader 30 can be asked to perform further processing by a *ComplReq* through this command. The Payment Gateway 55 can request for example an upgrade of the reader 30's software by initiating a download request and/or the display of a given message on the local computer screen.

### Software Download

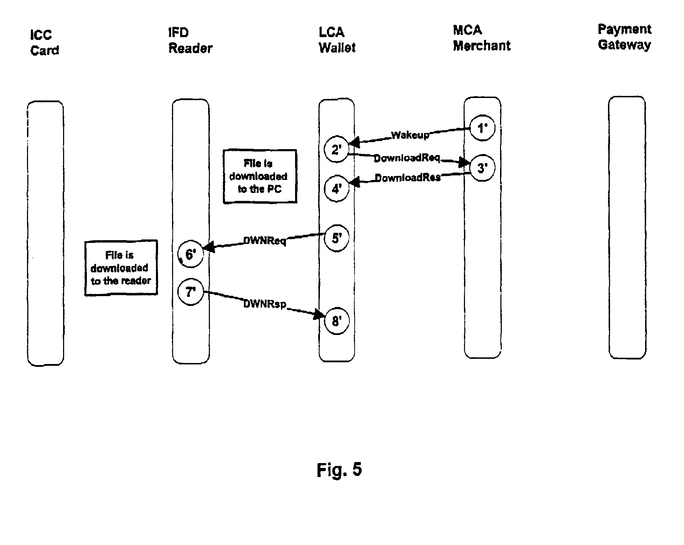

Fig. 5 illustrates a software download sequence. In this Figure, the numbers 1' to 8' are used to designate successive steps of the download sequence. Step 2' of Fig. 5 can be considered to be equivalent to step 22 of Fig. 4, in the case where the *ComplReq* is for software download. In this case, the *WakeUp* corresponds to the complete message contained in the *PRes 17* response.

In response to a *Wakeup* in step 1', the LCA 44 exchanges a download request *DownloadReq* with the MCA 50 in steps 2' and 3', leading to downloading of software to the LCA 44. In steps 5' to 8', a *DWNReq* is exchanged between the LCA 44 and reader 30 leading to downloading of the software to the reader 30.

The software download application is protected by an RSA signature calculated using a private key generated by the controlling Organization who attests with this key that the software inside the reader 30 is qualified for performing the payment transactions according to the selected security protocol.

The memory 40 can allow for the application and system to be downloaded together, or separately. The files to be downloaded are grouped in a single file whose file name corresponds to the design of the reader 30.

As described previously, a buffer zone of the reader 30's E²PROM serves as a buffer memory for temporarily storing system and/or application software transferred from the active E²PROM during a download operation. In case of an interruption or failure of a download operation, a signal initiates reloading the software.

### Installation

Because the reader 30 is controlled on the local computer 44 by a specific driver and a local computer application (LCA), the installation procedure is in two steps, driver installation and LCA installation, using for example a CD-ROM containing the software that is loaded into the computer.

### Software Upgrade

Usually the software is automatically upgraded at the end of a standard transaction, like a payment. The system uses the fact that the reader 30 is connected to a management server for checking the actual software version that is installed in reader 30. If this version is lower than the current one on the server, it sends a download request to the reader 30, as described above. The user can also request independently a software download.

The reader 30 is designed to be attached to a PC through a USB connection 42/46. However, it not only offers smart card operations, but is also a powerful tool for cryptogram calculations. Because the card 31 and reader 30 are separate from the PC 44, the reader 30 provides a useful tool for securing any transaction that is undertaken on the PC. The reader 30's system and application software being downloadable, any application can be developed and downloaded into the reader 30. These applications can use the tool library that is available in the reader's downloaded system software.

The evolution of a reader 30 is linked to its software architecture which, as described before, is built according to a three shells model. The first shell, the boot shell 62, is fixed inside a given reader 30. After the manufacturing process, this boot shell 62 is never modified inside the reader 30. Over this boot shell 62 is the system shell 64 that contains the tool box including encryption/decryption functions. The functions of this systems library are compatible to all of the boot functions, regardless of the boot versions, inside a same model number. Most of the time an upgrade of this shell 64 will raise an upgrade of all of the applications. In other words, the reader 30 will be entirely upgraded (system and application shells 64, 66).

The applications are developed in such a way that they are independent from each other, but only dependent from the system shell 64 and/or possibly from the boot shell 62. This last dependence should be avoided, where possible. A new application always requires a system upgrade. But it should never require a significant boot upgrade, because this means that a new reader model would have to be created, compatible with this new application. The system shell upgrade is linked to the introduction of the entry points to the new application.

So when a new application is downloaded for the first time, the system must also be downloaded at the same time. Afterwards, the application can be downloaded separately. This will reduce the download duration for the upgrade of a single application. If an application becomes obsolete, it is possible:
- To upgrade this application. Usually this corresponds to a separate download of the application. Sometimes the system must be updated at the same time.
- To replace the application by another application. This does not mean that the system will be downloaded with a new one, because the entry points of the previous application can be reused.
- To erase the application. This means the entry points will be erased, so the system will be downloaded.

When a payment application from a given Organization is integrated into the current software, the reader 30 must be qualified by this Organization. Its software is signed by the Organization; the private key that controls the download operation is the property of the Organization. This procedure will be chosen for any application that requires a particular qualification for the reader integrity. Because there is a single public key that controls the software download, there is only one specific external Organization that can control the software integrity.

After the reader manufacturing process, any modification of the software must be downloaded. Because the software must be correctly signed for being accepted by the reader 30, the external Organization that has proprietary rights to the download private key is able to control and to qualify the integrity and the quality of the new software. Even if the software modification corresponds to the addition of a new application completely independent from their own applications, the external Organization is able to control that this new added application really does not alter their secure applications. The advantage of this feature is that the external Organization that controls the private key always keeps control of the software downloaded in the reader.

It can be seen from the above that the invention has provided a versatile device ensuring entire security for the user, and which can be integrated in existing or future protocols directed to secure transactions in communications networks, in particular under control of an Organization that possesses the reader's private key. Furthermore, the described reader can be used for many other secure transactions with or without the insertion of a card, including e-banking, e-tax, secure e-mail, telecommunications and restricted access systems. Various modifications may be made to the described examples of hardware and software without departing from the scope of the appended claims.

## Claims

1. A device connectable as a terminal of a communications network for carrying out secure transactions in the network, in particular in connection with e-commerce, e-banking, e-tax, e-mail, telecommunications and restricted access systems, the device comprising:
a keypad, a display for displaying messages related to a secure transaction in progress, a microprocessor, and a memory arranged to store software in three shells, a boot shell, a system shell and an application shell, wherein the boot shell contains non-downloadable ground software that manages software download into the system shell and the application shell;
the device being associated with software downloadable into or downloaded in the memory, namely:
- system shell software containing software that manages the application shell, an ASN library and an encryption/decryption toolbox, and
- application shell software containing software that manages applications for secure transactions, comprising an application that is arranged, when the software is downloaded into the memory and the device is connected to the communications network, to encrypt within the device a code keyed in via the keypad and output the encrypted code, without the keyed-in code being accessible from outside the device.

2. The device of claim 1, wherein said application is arranged to perform the following operations internally of the device:
- momentaneously store, in a network-inaccessible part of the memory, a code keyed in via the keypad;
- encrypt the momentaneously-stored keyed-in code and erase it from the memory soon after encryption; and
- output the encrypted code from within the device to the communications network.

3. The device of claim 1 or 2, comprising a card reader for an ICC card, the device being arranged to enable card identification and acceptance on an ICC inserted in the reader followed, if the card is accepted, by said operations to establish transaction acceptance.

4. The device of claim 3, wherein at least a part of the card identification and acceptance operations and/or of said transaction acceptance operations is performed using a processor incorporated in an ICC inserted in the device.

5. The device according to any preceding claim, wherein the memory comprises a buffer zone which serves as a buffer memory for temporarily storing previously-loaded system and/or application software during a download operation, the memory being associated with means, responsive to a signal indicating interruption or failure of a download operation, for reloading system and/or application software.

6. The device according to any preceding claim, wherein the memory comprises a non-volatile memory, in particular an E²PROM, for storing the downloadable software, and a RAM which includes said network-inaccessible part of the memory.

7. A device according to any preceding claim incorporated in: (a) a hand-holdable external card reader connectable to a personal computer; (b) a discrete keyboard of a personal computer, connectable to a personal computer; (c) a portable personal computer; (d) a Set Top Box of a digital television receiver; (e) a fixed telephone set; (f) a mobile communications device such as a mobile telephone; or (g) a point-of-sale vending device.

8. A cardholder system for carrying out secure transactions in a communications network, comprising a device according to any preceding claim, associated with a local computer application (LCA), such as a PC, to which the device is connected, preferably by an USB connector.

9. The cardholder system of claim 8, wherein the LCA stores software including a Dynamic Link Library (DLL) for for managing all transmissions between the local computer and a connected device.

10. A communications network in which encrypted data is communicated between a card issuer system, merchant site applications, a payment gateway and a device according to any one of claims 1-7 or a cardholder system according to claim 8 or 9, wherein the device is connected to the communications network to form a terminal for carrying out secure transactions in the network.

11. The communications network of claim 10 wherein the card issuer system, merchant site applications, and payment gateway exchange electronic certificates according to a protocol such as SET.

12. A computer program on a computer readable medium for carrying out secure transactions in a communications network to which a device as claimed in any one of claims 1-7 is connected via a local computer application, comprising said system shell software and application shell software downloadable into the device's memory, and software downloadable into the local computer application for managing all transmissions between the local computer and a connected device.
